# EUROPEAN PATENT APPLICATION

(11) **EP 1 059 039 A2**
(43) Date of publication of application: **13.12.2000**
(21) Application number: 00304886.5
(22) Date of filing: 08.06.2000
(51) Int. Cl.: A23G 9/08, B65D 85/78

(54) **Ice mould**

(30) Priority: 08.06.1999 GB 9913318
(71) Applicant: Peplink Designs Ltd., Camden, London NW1 9AY (GB)
(72) Inventor: Newman, Richard John, c/o Peplink Designs Ltd., Camden, London NW1 9AY (GB)
(74) Representative: BROOKES & MARTIN

(57) **Abstract**

The present invention relates to an ice mould. There is described an ice mould (10) comprising one or more ice mould cups (11), each cup having a base (13) and a rim (15) and having a wall (14) extending axially therebetween. The rim is of larger dimensions than the base and the cup is further provided with an internal projection extending centrally upwardly from the base but not so far as to be level with the rim of the cup. Preferably, the projection is generally circular in lateral cross-section and generally U-shaped in axial cross-section. Typically, the projection is hollow and the mould is formed from a highly flexible food-grade injection-moulded plastics material or moulded rubber composition. The base and rim are typically generally circular, elliptical, square or rectangular, but may have any other geometrical shape, such as pentagonal, hexagonal or octagonal.

## Description

The present invention relates to an ice mould.

According to the present invention, there is provided an ice mould comprising one or more ice mould cups, each cup having a base and a rim and having a wall extending axially therebetween, wherein the rim is of larger dimensions than the base, and wherein the cup is further provided with an internal projection extending centrally upwardly from the base but not so far as to be level with the rim of the cup.

Preferably, the projection is generally circular in lateral cross-section and generally U-shaped in axial cross-section.

Preferably, the central projection extends upwardly from the base by an amount not greater than about 0.85 times the distance between the base and the rim, preferably by an amount between 0.5 and 0.85 times the distance, more preferably between 0.65 and 0.85 times, most preferably between 0.8 and 0.85 times.

Preferably, the projection tapers as it rises from the base towards the rim.

Preferably, the projection is hollow. Preferably, the mould is formed from a highly flexible food-grade injection-moulded plastics material or moulded rubber composition.

The base and rim are typically generally circular, elliptical, square or rectangular, but may have any other geometrical shape, such as pentagonal, hexagonal or octagonal.

The above and other aspects of the present invention will now be described in further detail, by way of example only, with reference to the accompanying drawings, in which:
Figure 1 is a perspective view of an embodiment of an ice mould in accordance with the present invention;
Figure 2 is a cut-away perspective view of the embodiment of Figure 1;
Figure 3 is an inverted perspective view of the embodiment of Figure 1;
Figure 4 is a cross-section of a moulded ice obtainable with the mould of Figure 1;
Figure 5 is a perspective view of the moulded ice of Figure 4; and
Figure 6 is a plan view of the moulded ice of Figure 4.

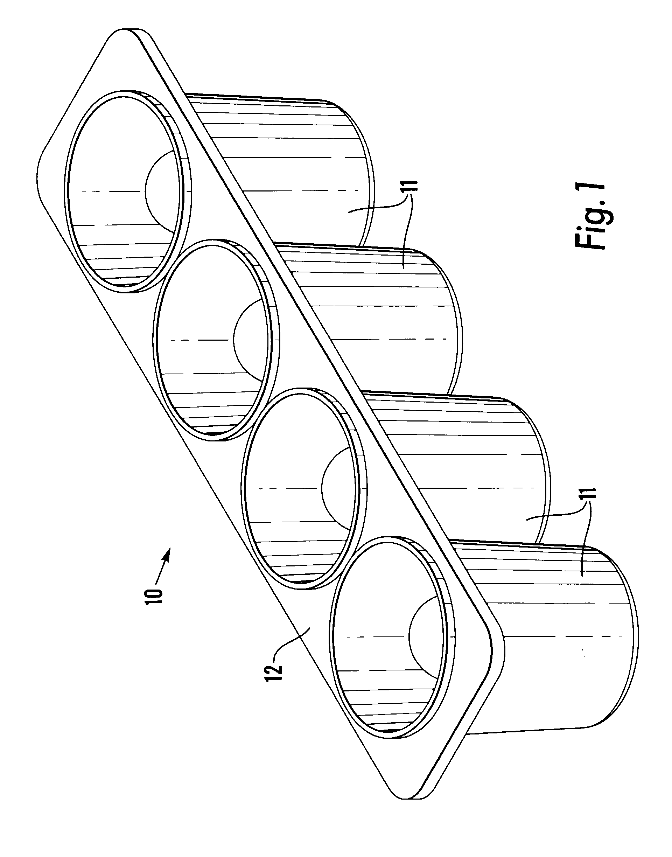

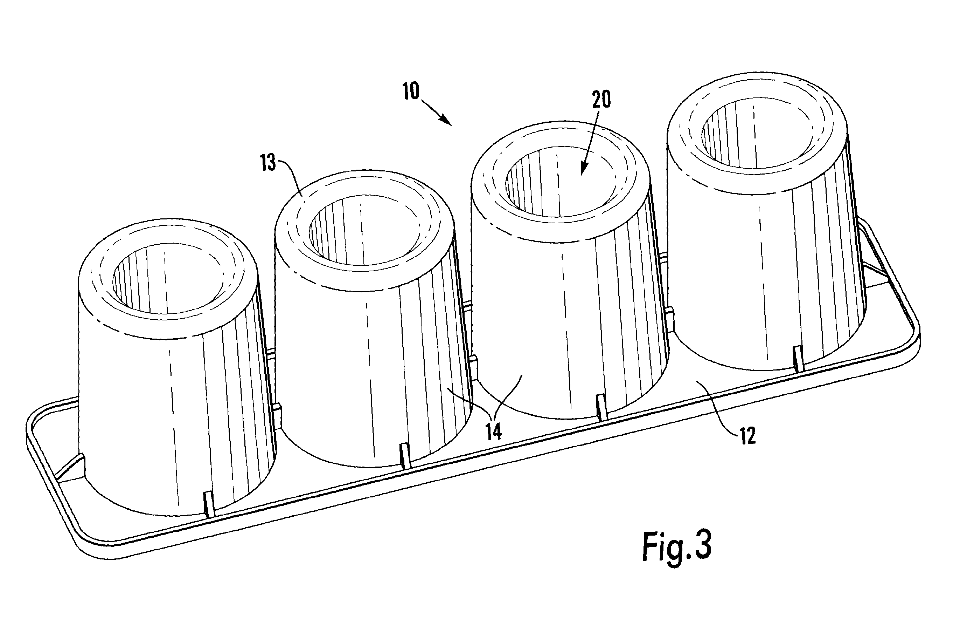

With reference to Figures 1 to 3, there is shown an ice mould 10 comprising four ice mould cups 11 held together in a row by means of a collar 12. Each cup is generally rotationally symmetrical and has a circular base 13 and a wall 14 extending upwardly therefrom and terminating in a circular rim 15, which may, as shown, project above, or be flush with, collar 12. In the preferred embodiment shown, rim 15 has a larger diameter than base 13, such that wall 14 tapers towards the base 13.

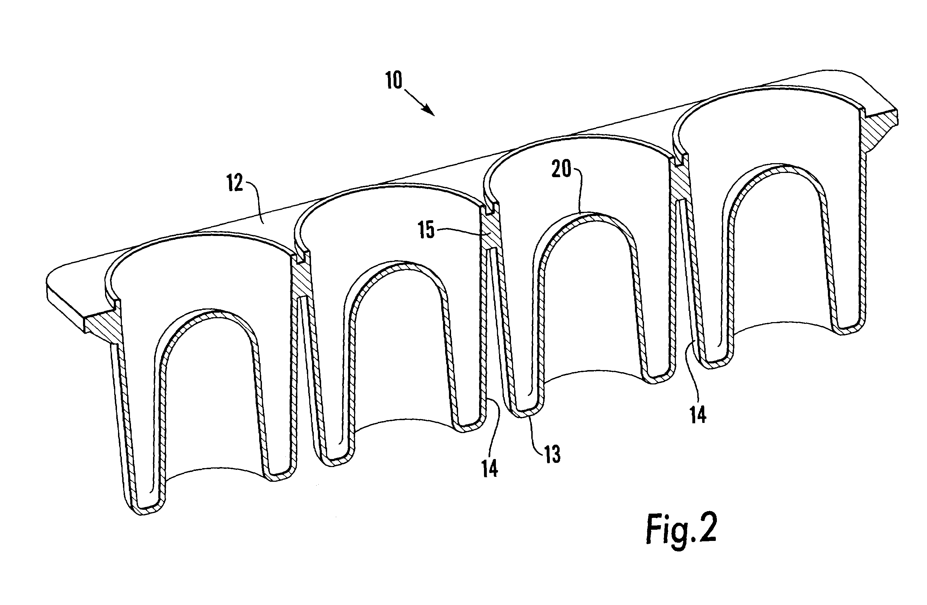

As is most clearly seen in Figure 2, the cup 11 has a projection 20 extending upwardly from the base thereof, tapering towards the rim, that is to say, in the opposite direction to the walls 14 of the cup. As shown, projection 20 has a generally inverted U-shape cross-section when viewed axially. Laterally, projection 20 has a circular cross-section of diminishing diameter from the base 13 to the upper surface 21 thereof.

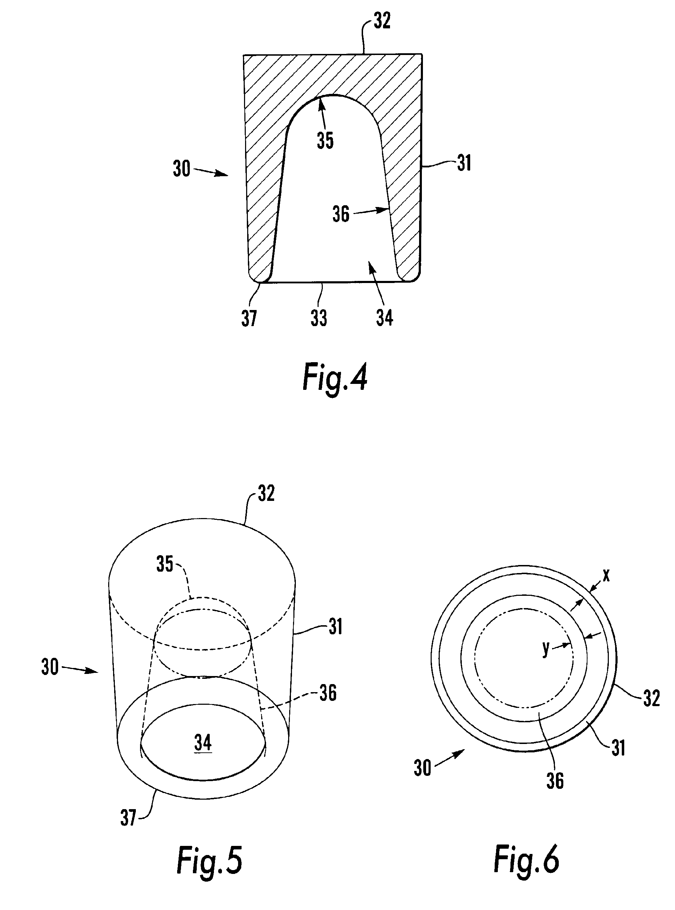

The structure of the mould can perhaps be most clearly seen with reference to the structural features of the moulded ice formed when the mould is filled with water and placed for a period in a freezer. Figure 4 shows in axial cross-section such a moulded ice. The ice 30 has sides 31 which taper from the top surface 32 of the ice towards the base 33 at an angle of around 8°. The tapering is represented by reference x in Figure 6, which is a plan view of the ice. Projection 20 of the mould forms an interior cavity 34 having an domed roof 35 and walls 36 which taper from the base 33 to the roof 35 by an angle of about 16°. This tapering is represented by reference *y* in the plan view, Figure 6. In a typical embodiment, the ice is around 6 cm in height and around 5 cm in width (diameter) at the top. In such an embodiment, the domed roof 35 has a radius of curvature of about 13 mm from a centre which is at a point approximately 60% of the distance from the base 33 to the top 32. In this embodiment, this provides a thickness of ice between the roof 35 of the cavity and the top surface of the ice of around 1 cm. The point 37 at which the sides 31 of the ice and the walls 36 of the cavity meet is curved with a radius of curvature of around 3 mm.

In use, the ice, particularly in the size described above but without being limited thereto, is very suitable, when inverted from the configuration described above and illustrated in the drawings, for use as a drinking vessel, especially alcoholic beverages traditionally drunk in a single mouthful, such as vodka etc. Being a flexible unitary article, the mould is easily manipulated to release the ice. Any number of moulds 11 may be provided together in a single collar 12 in any arrangement. The specific embodiment described has a linear array of four moulds. Matrices of 4x2, 4x3, 3x2, 3x1 will, as will others, all be equally useable.

## Claims

1. An ice mould (10) comprising one or more ice mould cups (11), each cup having a base (13) and a rim (15) and having a wall (14) extending axially therebetween, wherein the rim (15) is of larger dimensions than the base (13); and wherein the cup (11) is further provided with an internal projection (20) extending centrally upwardly from the base (13) but not so far as to be level with the rim (15) of the cup (11).

2. An ice mould (10) as claimed in Claim 1 wherein the projection (20) is generally circular in lateral cross-section and generally U-shaped in axial cross-section.

3. An ice mould (10) as claimed in Claim 1 or Claim 2 wherein the internal projection (20) extends upwardly from the base (13) by an amount not greater than about 0.85 times the distance between the base (13) and the rim (15), preferably by an amount between 0.5 and 0.85 times the distance, more preferably between 0.65 and 0.85 times, most preferably between 0.8 and 0.85 times.

4. An ice mould (10) as claimed in any preceding claim wherein the projection (20) tapers as it rises from the base towards the rim (15).

5. An ice mould (10) as claimed in any preceding claim wherein the projection (20) is hollow.

6. An ice mould (10) as claimed in any preceding claim wherein the mould is formed from a highly flexible food-grade injection-moulded plastics material or moulded rubber composition.
